# EUROPEAN PATENT SPECIFICATION

(11) **EP 4 569 428 B1**
(45) Date of publication and mention of the grant of the patent: **04.11.2026**
(21) Application number: 23751692.7
(22) Date of filing: 31.07.2023
(51) Int. Cl.: G06F 21/55, B60W 40/10, H04L 9/40, G01S 7/40, G08G 3/00, B60W 50/04, B60W 60/00

(54) **DETERMINING UTILISATION OF RESOURCES IN A SYSTEM HAVING AUTONOMOUS CAPABILITY**
BESTIMMUNG DER NUTZUNG VON RESSOURCEN IN EINEM SYSTEM MIT AUTONOMER FÄHIGKEIT
DÉTERMINATION D'UTILISATION DE RESSOURCES DANS UN SYSTÈME DOTÉ D'UNE CAPACITÉ AUTONOME

(30) Priority: 09.08.2022 GB 202211566; 09.08.2022 EP 22275104
(43) Date of publication of application: 18.06.2025
(73) Proprietor: BAE SYSTEMS plc, London SW1Y 5AD (GB)
(72) Inventor: SKELTON, Gregory, Warton Lancashire PR4 1AX (GB); CLARK, David William Thomas, Warton Lancashire PR4 1AX (GB)
(74) Representative: BAE SYSTEMS plc Group IP Department
(86) International application number: PCT/GB2023/052022
(87) International publication number: WO 2024/033609

(56) References cited:
- WO-A2-2022/093397
- GB-A- 2 573 006
- US-A1- 2020 233 060
- US-A1- 2021 116 558

## Description

The present invention relates to determining utilisation of resources in a system having autonomous capability.

Various types of systems having autonomous capability have been developed. Examples include air, land and/or water-based/maritime vehicle systems that can react automatically to stimuli detected by sensors to control some of their onboard components, such as speed/direction controllers, etc. In the case of some existing aircraft having autonomous capability the pilot operates the aircraft's sensors via controls within the cockpit. The operator uses their own experience to decide the most appropriate sensor(s) to use, and can also decide which sensor mode to use for present tasking. Sensors and sensor modes are controlled discretely and independently, i.e. the use of one sensor does not affect the use of another.

Modern and future sensors are more powerful and able to 'see' further, thereby generating more data which, in turn, increases the amount of information (clutter) presented to the operator. The growth in capability of modern sensors, combined with the growth of autonomy, can create a significant challenge for the operator when determining which sensor, which sensor mode, and which combination of sensor types, will generate the most effective picture. It is believed that this may even become an impossible challenge for a human.

In a military context, it is believed that in future adversaries could be capable of near-imperceptibly spoofing and so it may become virtually impossible for current sensor systems to differentiate spoof from real entities. Understanding how an autonomous system responds to a stimuli can offer an adversarial advantage to malevolent actors. For example, an adversary could inject spoof entities into a system, e.g. multiple radar or infra-red detections to give the impression of multiple threats instead of a single aircraft. There have been cases where autonomous drones have been forced to land due to the adversarial exploitation of a relationship between sensor inputs and the resultant system behaviour. All entities detected by the vehicle require sensor resource, e.g. sensor tracking effort, even if they are spoof. Multiple entities require even more effort to track. If the multiple entities are spoof, e.g. injected by a malevolent actor, then it is important to avoid squandering sensor resource.

Further, most advanced systems having autonomous capability include error checking and fault detection and so many errors and failures can be detected; however, there may still be insidious failures/errors that may be undetected by existing systems.

Humans have an intuitive gut feel which develops from learned experience. Often gut feel and the consideration of evidence to an outcome align, but often they do not. An individual may be presented with objective evidence, including sensor output, that points to what would initially appear to be an unequivocal conclusion, but humans often still rely on gut feel and gut feel may suggest a conclusion to the contrary, which then transpires to be correct. This gut feel is based on subtle nuances around how information has been presented to the individual. These nuances may relate to how the data was originally generated, where data has come from, when it was produced, and its quality.

It is difficult to truly describe or simulate gut instinct, but it is often the consideration of facets of received data that would not normally be considered in order to compile a picture of trust, rather than simply an objective conclusion. If a protection system is able to rely on an inbuilt 'gut feel', rather than raw data alone (which can be spoofed), then task-based cockpit systems or the like will not invest huge amounts of effort tracking spoof entities - entities that very often are known by the human pilot to be erroneous - whilst the system continues to interleave into a tracking/lock/follow activity. Currently, no automatic systems for addressing this problem exist.

US 2021/116558 A1 describes a global integrity check system and associated method. US 2020/233060 A1 describes a sensor data anomaly detection system and method for a vehicle. GB 2 573 006 A describes apparatus and method for selecting a task to be performed by a sensor. WO 2022/093397 A2 describes networked air defence infrastructure with integrated threat assessment.

Embodiments of the present invention are intended to address at least some of the above technical problems.

Embodiments can use a schema/rule set to determine the level of investment required, in terms of system resource, e.g. based upon threat level and potential threat level of objects detected by sensors. Embodiments can offer protection to products that consume data from multiple, dissimilar and distributed sources (e.g. different platforms and different sensors and geographically distributed) in order to support decision making, based upon the trustworthiness of that data.

Embodiments can perform cross-checking activities to determine if the data being received is true, i.e. not spurious, by means of cross-checking. Embodiments can also determine a level of importance, based upon the activity it is currently performing, which in turn affects the level of effort invested in the amount of cross-checking activities - if there's a high level of importance, more effort is invested. By considering combinations of conditions relating to the source and quality of data, embodiments can provide protection against excessive resource consumption due to sensor spoofing.

Embodiments can also protect against system failures, not by identifying the failures, but by assessing the integrity of the data produced by the system and aiming to ensure that resource usage decisions made using that data has a required data integrity (i.e. the data can be trusted).

According to one aspect of the present invention there is provided a computer-implemented method of determining utilisation of resources in a system having autonomous capability according to claim 1.

The plurality of input data may comprise a plurality of track data output by a respective plurality of sensors, wherein each of the plurality of track data comprises information regarding at least one entity detected by the respective sensor.

The method may comprise using the integrity values to determine utilisation of the sensors, e.g. in future tracking of the detected entities.

The track data may comprise location information (e.g. latitude, longitude and/or altitude) of a said detected entity; a speed of a said detected entity; a direction of a said detected entity and/or a type (e.g. vehicle type) of a said detected entity.

The method may further include obtaining additional sensor data from at least one of the plurality of sensors. The additional sensor data may be used by at least one of the rules in the plurality of rules. The additional sensor data may comprise a confidence rating for the track data provided by the sensor and/or information relating to a type of the sensor.

The integrity value may represent confidence that the detected entity of the track data is a real object, and a rule in the rule set data may determine a high integrity value for the track data upon determining that the detected entity of the track data is likely to be a real object.

The plurality of rules may comprise:
generating a low integrity value for the input data if the input data indicates unusual behaviour of a detected object or system component, and/or
generating a high integrity value for the input data if the input data matches one or more other input data.

The rules in the rule set data relating to track data may be selected from a set comprising:
determining a high integrity value if the detected entity of the track data is also detected in at least one other of the plurality of track data;
determining a low integrity value if there is a significant difference (greater than a threshold value of, e.g. 250m) in detected position of the detected entity between the track data and at least one other of the plurality of track data;
determining a low integrity value if it is unusual for a type of detected entity of the track data to be in a location detected by the sensor (e.g. a low integrity value is given to track data indicating an airliner flying at an unusually low level, whilst a high integrity value is given if it is flying at the normal/expected altitude over a particular area);
determining a low integrity value if a type of the detected entity of the track data is not operating within known performance limits for a type of vehicle (e.g. a low integrity value is given to track data indicating a helicopter flying at an unexpected high speed, whilst a high integrity value is given if it is flying within its normal expected speed range);
determining a low integrity value if the detected entity of the track data originated from a hostile country, and/or
determining a low integrity value if a behaviour of the detected entity of the track data is not normal (e.g. a civil flight has suddenly turned towards the vehicle and increased its speed).

The method may comprise fusing the plurality of track data to produce a list of fused tracks.

The method further comprises receiving task data relating to a plurality of tasks to be performed during use of the system. In some embodiments the task data may identify an object and/or an area, and an action to be taken in relation to the object and/or the area, e.g. a task comprises tracking an object within a defined area.

The method further comprises checking the integrity values determined for each input data associated with a said task and generating data indicating whether the resource providing that input data (e.g. the sensor outputting the track data) should continue to be used for that task. For example, if the integrity values of the input data (e.g. track data) are below a threshold value then the method may generate data indicating that the components (e.g. sensors) outputting the track data should not be allocated to the task in future.

Each of the plurality of tasks may have an associated importance value and the threshold value for the task may vary according to the importance value of the task, e.g. a lower threshold value may be set for a task having a low importance value, whilst a higher threshold value may be set for a task having a high importance value. The threshold value and/or the importance value can be defined in a schema/rule set by a system operator.

The method may further comprise receiving a plurality of resource usage data, each of the plurality of resource usage data comprising a value representing a current usage level in relation to a maximum usage capacity of a resource of the system. The resource may comprise a said sensor of the system or another resource/component of the system.

The method may further comprise:
receiving a plurality of resource usage data, each of the plurality of resource usage data comprising a value representing a current usage level of a resource of the system, and
processing the resource usage data and the task data to generate a target usage level of the resource to be used in relation to the task.

For example, the method may further comprise analysing the data indicating whether the sensors outputting the track data should continue to be used for that task and the plurality of resource usage data to determine a future usage level of at least one of the sensors for use in relation to a said task. The task may comprise tracking an object using a resource comprising a sensor, and the processing may comprise reducing the target usage level of the sensor if the data integrity value of the sensor is low.

According to another aspect of the present invention there is provided a (computing) device comprising a processor configured to execute methods substantially as described herein.

According to yet another aspect of the present invention there is provided a system having autonomous capability including a processor configured to configured to execute methods substantially as described herein. The system may comprise, or be associated with, a vehicle.

According to another aspect there is provided a computer program product comprising instructions which, when the program is executed by a computer, cause the computer to carry out methods substantially as described herein.

### BRIEF DESCRIPTION OF THE FIGURES

For a better understanding of the invention, and to show how embodiments of the same may be carried into effect, reference will now be made, by way of example, to the accompanying diagrammatic drawings in which:
Figure 1 is a block diagram of an example vehicle system, including a computing device configured to execute an embodiment;
Figure 2 is a block diagram schematically showing the configuration of the computing device, including an integrity generator software component, a proportionality checker component and a resource monitor component, and
Figure 3 is a flowchart showing example steps performed by the integrity generator component;
Figure 4 is a flowchart showing example steps performed by the proportionality checker component, and
Figure 5 is a flowchart showing example steps performed by the resource monitor component.

### DETAILED DESCRIPTION OF THE FIGURES

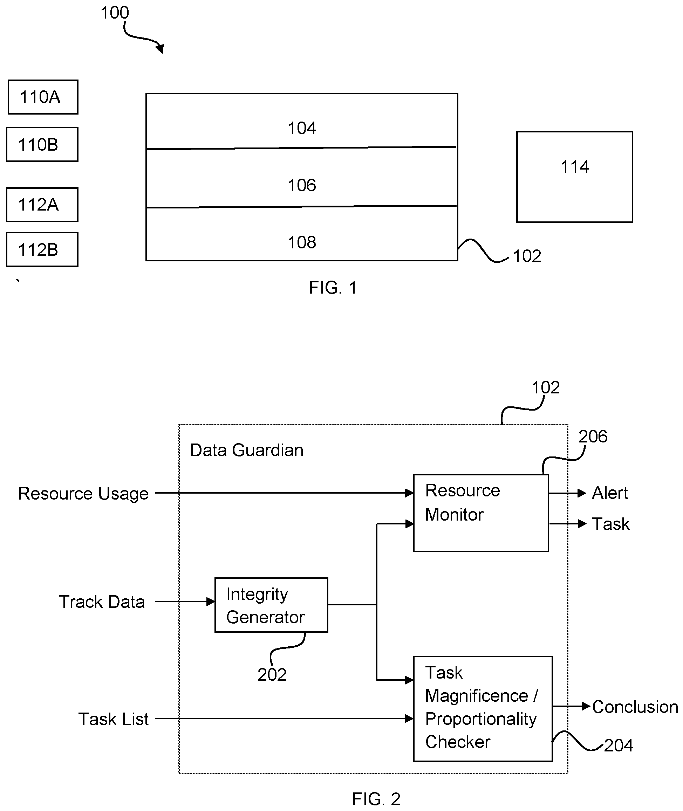

Figure 1 is a block diagram of an example system 100. The detailed examples given below are based on a vehicle system; however, it will be understood that embodiments can be used in connection with other types of systems having autonomous capability. A "system having autonomous capability" can also comprise an autonomous part of a manned system. The vehicle in the example can comprise any kind of land, air or water-based/maritime vehicle, such as an aircraft, that has autonomous capability. Various levels of vehicle autonomy exist and according to embodiments the vehicle system can be configured to receive control instructions from a human operator, who may be located onboard the vehicle or remotely. Common components of the vehicle, such as the body, engine, communications system, etc, are not shown for ease of illustration but will be well-known to the skilled person.

The vehicle system 100 comprises a computing device 102. The computing device can be substantially conventional and will include, or be associated with, at least one processor 104 and internal memory 106, e.g. a Random Access Memory. The internal memory can store data and instructions for execution by the processor. The computing device further includes at least one interface 108 that allows communication with other components/devices, e.g. via any suitable wired/wireless interface and/or communications network. The computing device may also include, or be associated with, further conventional features, such as non-volatile storage device(s), a user interface, and so on, which need not be described herein in detail. The computing device may be mounted in or on the vehicle, or may be remote from it, communicating via a network.

The computing device 102 will be in communication with a plurality of sensors 110A, 110B via the interface 108. The sensor(s) can be mounted in or on the vehicle, or in some cases may be remote from it. Examples of sensors include radar, LIDAR, accelerometers, GPS, etc. For ease of illustration only two sensors are shown in the example, but it will be understood that any feasible number of sensors, which can be of the same or different types, can be used in conjunction with embodiments.

The computing device 102 can also be in communication, via the interface 108, with one or more other component/resource 112A, 112B associated with the system/autonomous vehicle. Examples of such components include a fuel tank, weapons systems, etc. For ease of illustration only two components are shown in the example, but it will be understood that any feasible number of components, which can be of the same or different types, can be used in conjunction with embodiments.

The computing device 102 can further be in communication with a vehicle interface component 114 via the interface 108. The vehicle interface component may comprise a display used to display information to an operator of the vehicle system. In some embodiments the vehicle interface component may comprise, or communicate with, a vehicle control system (not shown) that directly issues control signals to components of the vehicle, e.g. vehicle propulsion or steering components.

Figure 2 is a block diagram of software components used by the computing device 102 according to an example embodiment. It will be understood that in alternative embodiments the software components can be combined or arranged differently.

Embodiments can perform two main roles. The first is to conserve and help optim ise the use of system resource by ensuring that resources, such as sensors, are used proportionately based upon a number of criteria. The second role is to ensure that the information (e.g. generated by a sensor fusion system), upon which vehicle behaviour or operational decisions are based, is not spurious. By employing a rule set, or schema, embodiments can declare the level of effort that should be invested in ascertaining whether the information received is true or spurious. For tasks requiring significant investment of resource, e.g. tracking a high-threat target, more demand is created to ensure that the correct level of resource is invested. If an entity is detected but presents little or no threat then embodiments can determine that little/no effort is required in order to ensure a proportional level of resource is invested in tracking it.

Embodiments can use a schema/rule set to ensure that multiple sources of data, e.g. different sensor types, other aircraft's (co-operator's) sensors, optionally along with open source data (such as location, etc), or any other attributes, are consolidated, to create assurance and suggest a level of 'truth' - truth in this instance is represented by a score. Embodiments can generate a value/score based on the number and variety of sensors, and other available data, to generate a requirement for sensor resource investment. The greater the number and variety of sensors that are able to detect an entity, the higher the score (although it will be appreciated that this is merely one example and in alternative embodiments a lower value, or a non-numerical rating system, could be used). This, combined with how threatening an entity may be, can create a sensor demand, where lots of real entities and threat levels results in proportional sensor demand. Multiple spurious entities, whilst apparently threatening, will result in low demand on the sensors.

The example embodiment comprises an integrity generator component 202 that can process various information, such as vehicle location, behaviour, sensor type(s), etc, to generate an integrity value/rating for each data received as input by the integrity generator component, e.g. data produced by system's sensors. The example embodiment further comprises a proportionality checker component 204 that can determine, based on perceived threat and/or the integrity rating of the input data, how much effort to invest in future in relation to that input data, e.g. on tracking an entity detected by one or more of the sensors. The component can use a schema/predefined rule-set to try to ensure that sensor resource is not wastefully devoted to tracking a spoof entity, for example. The example embodiment further comprises a resource monitor component 206 that may be partly driven by a schema, such as a sensor schema. In some embodiments the component can output an indication that current resource usage should be changed. Data received as input by the various components may be stored in the memory 106 of the computing device 102, or may be received from a remote source.

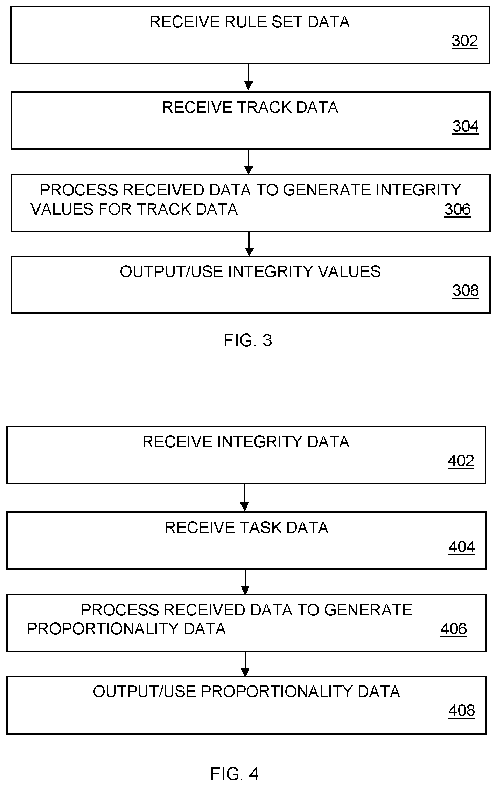

Figure 3 is a flowchart showing example steps performed by the integrity generator component 202.

At step 302 the integrity generator component 202 receives a data integrity schema which comprises a rule set for determining an integrity rating/value for input data. Examples of the rules will be given below. The schema will be created by one or more specialists, e.g. a specialist for radar sensor data may create rules used for determining the integrity of track data produced by the radar-based sensors of the system 100, and so on. The schema may be modified for each mission, e.g. the rules most likely to be appropriate for a particular mission are selected by an operator for use as the schema data that is input at step 302.

At step 304 the integrity generator component 202 receives input data from components of the system 100. The input data can take various forms and can be provided by anything that converts information regarding the system or external environment into system data. Examples include a plurality of track data output by a respective plurality of sensors, e.g. sensors 110A, 110B, regarding entities they have detected, and, optionally, additional data from one or more of the sensors. Examples of the track data comprise latitude, longitude, altitude, speed, track of one or more detected entity. An example of additional sensor data comprises information regarding the type of the sensor. Different sensors may provide more or less data depending on their capabilities, and some smart sensors may be able to provide a form of confidence rating for the data they provide. Track data from multiple sensors/platforms can be fused to produce a list of fused tracks.

Embodiments can be applied to any system that uses data, where rules can be applied to that data to assess its integrity; for example, air data, navigational data, fuel system data, hydraulic system data and/or electrical system data. It will be understood that complex systems can operate using thousands of different types of data and a non-exhaustive list of examples of input data that can be processed by embodiments includes: air data (speed, pressure, temperature, etc); hydraulic system data (pressure, temperature, contents, pump states); fuel system data (contents, temperature, pressure, flow rates); inertial system data (rotation rates, orientation, acceleration, velocity, position); weapon system data (stores amounts, store status, targeting information); GPS data (position, speed, altitude, time); navigation system data; non-track related radar data; transponder data; cockpit interface data (button presses, stick/throttle movements, switch positions); human physiology data (heart rate, skin temperature, blood pressure, pupil size, gaze), and data pre-loaded into the system (navigation data, target data, routes, missions).

At step 306 the integrity generator component 202 processes the received data and determines how much the data can be trusted. This can involve applying one or more rules from the schema to each input data in order to generate a score/numerical value that can be used as its integrity value/rating.

Examples of rules that can be applied for determining the integrity of each input track data are given below:
- Is it usual for a track to be in that location (e.g. why is an airliner flying low level?) - if so, determine a low integrity value
- Is the track within its known performance limits (e.g. why is a helicopter flying at 350 knots?) - if so, determine a high integrity value
- Did the aircraft originate from an unexpected location (e.g. why is a friendly aircraft originating from a hostile country) - if so, determine a low integrity value
- Is the track's behaviour abnormal (e.g. why has a civil flight suddenly turned towards us and increased speed?) - if so, determine a low integrity value
- Can the track not be seen by other sensors (e.g. it's close enough to be seen by FLIR, but the FLIR isn't picking it up, or a friendly should be able to see it with their radar, but cannot)? - if so, determine a low integrity value
- Is there a significant difference in track position between sensors? - if so, determine a low integrity value

Other examples of rules/criteria that can be used by embodiments for assessing input track data include:
- Are the detections unusual (e.g. have four aircraft been detected in an area where only two ships typically operate)? - if so, determine a low integrity value
- Can multiple sensors detect these entities? - if so, determine a high integrity value
- Can multiple cooperating aircraft detect these entities using different sensors (to ensure that not all radars are being spoofed)? - if so, determine a high integrity value
- Can individual signatures of the detected entities be identified? - if so, determine a high integrity value

It will be understood that the above rules are merely exemplary and many more/alternatives can be provided depending on the data integrity schema created and the type of data being assessed.

Examples of rules that can be applied for determining the integrity of input air data are given below:
- If climb rate of detected object is greater than aircraft climb rate then determine a low integrity value
- If acceleration of a detected vehicle is greater than the known maximum acceleration for a vehicle of that type then determine a low integrity value
- If speed of a detected vehicle is greater than the known maximum speed for a vehicle of that type then determine a low integrity value
- If speed and climb rate mismatch then determine a low integrity value
- If pressure higher/lower than possible, or changing at a greater rate than possible, then determine a low integrity value
- If pressure changing in the wrong direction (i.e. pressure increasing in a descent) then determine a low integrity value

Some of the above rules could be used to identify low integrity data caused by simple failures such as a pitot/static system blockage. A human pilot will likely be able to identify the symptoms of a pitot/static system blockage, but a conventional autonomous system may not.

Examples of rules that can be applied for determining the integrity of input GPS data are given below:
- If altitude of a detected vehicle does not match with air data system then determine a low integrity value
- If there are jumps in position data, or poor position consistency, then determine a low integrity value
- If the time or rate of change of time does not match other time sources then determine a low integrity value
- If the detected position is changing differently than that given by the INS position, or the position derived from navaids, then determine a low integrity value

As another example, a fault in a fuel system sensor may result in the fuel contents over-reading. This can result in a pilot or an autonomous system committing to a particular route, resulting in fuel starvation and loss of the aircraft. An embodiment configured with appropriate rules can continuously assess the integrity of the fuel system data. Unusual behaviour such as fuel contents increasing, fuel contents greater than the max capacity of a fuel tank, or fuel use rate inconsistencies would result in a low fuel data integrity. This would then either alert the pilot, allowing them to make an appropriate decision regarding the task, and/or feed the integrity data to an autonomous system which can then decide that it does not have the required fuel data integrity to make certain routing decisions. The embodiment does not detect failures as such, and doesn't know that the there is less fuel available than required for the mission, but the embodiment does determine that there is insufficient integrity in the data to allow certain resource usage decisions (e.g. committing the engine to navigating a particular route) to be made.

In some cases the determination of a rule may correspond to a binary yes/no (e.g. either 1 or 0), whilst in other cases the numerical value determined may be a number within a range (e.g. between 0 and 10) to indicate a confidence score or the like. The various factors can be combined into an overall integrity score for each input data, e.g. by summing the values of all the rules applied, possibly using weighted averages.

At step 308 the generated integrity ratings can be output by the integrity generator component 202. The output integrity rating may include the numerical value determined for each input data processed, and/or other information, such as information identifying the system component that provided the input data, each entity detected in the input track data and/or the associated sensor, etc. The integrity rating may be received as an input by the proportionality checker 204 and/or the resource monitor component 206 and/or some other component that can use the integrity values to determine future utilisation of resources of the system. The steps performed by the integrity generator component may be repeated at small regular intervals, e.g. several times a second, or whenever new track data is received from a sensor. Thus, embodiments can determine resource utilisation substantially in real-time based on current data inputs, such as sensor detections.

Figure 4 is a flowchart showing example steps performed by the proportionality checker component 204. The proportionality checker component is intended to assess whether the integrity of the data that is processed to perform a task is proportional to the scale/magnitude/importance of the task (e.g. resource usage required, danger, consequences, etc). The importance value may be determined by a system operator.

At step 402 the proportionality checker component 204 receives as input integrity rating data from the integrity generator component 202.

At step 404 the proportionality checker component receives as input data relating to a plurality of tasks due to be performed during the current mission assigned to the system 100. This task data may take various forms. For example, one of the tasks may identify an entity or area and an action to be taken in relation to it, e.g. track detected foreign aircraft, detect any entity within area defined by a set of coordinates, etc. Tasks can range from large scale mission level tasks, down to very small system or sub-system level tasks. Tasks can be hierarchical, with larger tasks being composed of smaller tasks.

A non-exhaustive list of examples of tasks includes: mission level tasks (tasks involving multiple platforms working together to achieve a common goal, such as reconnaissance mission, air superiority mission; jamming mission, relocation mission, humanitarian mission); platform level tasks (tasks involving a single platform, such as follow a route, drop stores, re-fuel, orbit, observe, illuminate); system level tasks (tasks involving a single system, such as stop transmitting, track a target, start jamming); sub-system level tasks (tasks involving parts of a system, such as transfer fuel from one tank to another, turn off a cooling system, change sub-system mode, turn on a light). At step 406 the proportionality checker component 204 processes the received data. In some embodiments this processing can involve checking the integrity rating(s) generated for one or more of the input data associated with a particular task. The required data integrity will depend on the task, e.g. low integrity data may be tolerated for some tasks, but not for others. The required (e.g. minimum numerical value) data integrity required for a particular task can be defined in a schema/rule set by a system operator.

For example, if the task is tracking a particular aircraft then the integrity ratings of all the track data where that aircraft was detected (e.g. within a recent time window) can be assessed. If the integrity ratings of all the relevant track data are below a particular threshold value then this suggests that the detected entity is spoof and so the proportionality checker may generate an output indicating that the number of sensors allocated to the task is disproportionate. Additionally or alternatively, if only one (or a few out of many) track data has a high integrity rating, and the others are low, then the proportionality checker may generate an output indicating that the sensors allocated to the task is disproportionate.

As another example, allocating four aircraft to perform a mission will use lots of fuel and expose the aircraft to potential danger. This is a large scale task and so the data used to make that decision must have very high integrity. Thus, the proportionality checker may generate an output indicating that the data integrity value is not sufficient if it is below the high threshold. Jettisoning fuel unnecessarily may have consequences for a single aircraft and so the data integrity required to make that decision must be proportional. Thus, the proportionality checker may generate an output indicating that the data integrity value is not sufficient if it is below the relevant threshold. Turning on a light has low consequences and so the data integrity required to make that decision will likely be low. Thus, the proportionality checker may generate an output indicating that the data integrity value is not sufficient only if it is below a relatively low threshold.

At step 408 the proportionality checker component 204 can output the data generated at the step 406. The data may comprise information regarding whether utilisation of the resources, e.g. sensors, being used for the tasks should be modified, or an indication that the data integrity value is not sufficiently high for a particular task. In some cases the output data may correspond to a binary yes/no (e.g. either 1 or 0), whilst in other cases it may comprise a numerical value within a range (e.g. between 0 and 10) to indicate a confidence score or the like. The data may be received as input by the resource monitor 206 and/or may be output to the component 114, e.g. to display a warning to the operator that sensors are being used disproportionately. The generated data may also be output to one or more other systems, e.g. a component that can decide what to do if the data integrity value does not meet a desired data integrity set by an operator or the like.

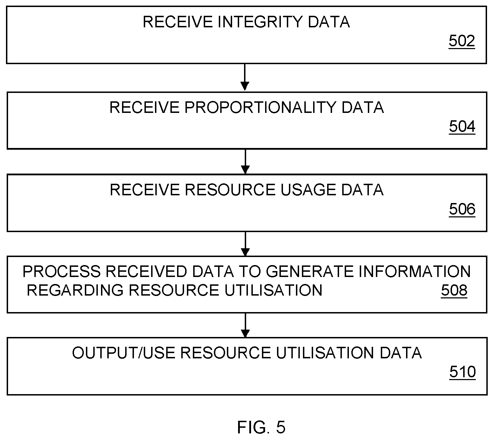

Figure 5 is a flowchart showing example steps performed by the resource monitor component 206. In some embodiments the resource monitor component operates as a proportionality checker that is applied to tasks that are already underway (i.e. it can determine whether is data integrity is sufficiently high to continue to perform a particular task that has already been started), whilst the proportionality checker component 204 may be used to determine whether data integrity is sufficiently high to start performing a particular task. In other embodiments the steps shown as being performed by the resource monitor component are part of those performed by the proportionality checker component (i.e. there is not necessarily a separate resource monitor component).

At step 502 the resource monitor component 206 receives as input the integrity rating data from the integrity generator component 202.

At step 504 the resource monitor component receives as input data from the proportionality checker component 204. Thus, the resource monitor can receive indications of the level of sensor resource invested to ensure proportionality.

At step 506 the resource monitor component receives as input data relating to resource usage. This data may be received from some of all of the sensors 110A, 110B and/or some of all of the other components 112A, 112B associated with the vehicle system 100. The resource usage may be a numerical value, e.g. score out of 10 or a percentage, representing a current usage of a particular resource with respect to its maximum usage/capacity. The data may also include further information, e.g. an identifier, type information, etc, of the sensor or component.

At step 508 the resource monitor component 206 processes the received data. This can involve analysing the integrity rating, the resource usage data and the task data to generate information regarding whether usage of resources, such as the sensors, should be modified. As an example, if the determinations indicate that a real (i.e. non-spoof) entity is detected, but its level of threat is perceived to be low, then use of the schema by the resource monitor component 206 can ensure that sensor resource is not wastefully devoted to tracking the likely spoof entity.

At step 510 the data generated at the step 508 can be output. The output data may comprise information regarding how resource usage should be changed or continued, such as a target usage level of the resource that should be used in future in relation to a particular task. For example, the output may comprise data indicating that a particular sensor should no longer be used, or its usage level should be reduced, in relation to tracking a particular detected entity that is determined to be at risk of being spoof. Thus, embodiments may generate output indicating that usage of a particular resource should be lowered to reduce the risk of wasting resource on a spoof track. However, if a new task is generated to perform another action on the same tracked target then the scale of the task increases and so the required data integrity to undertake the new task may be increased. To achieve this, one or more of the following resource usage controls can be used: increase sensor resource on the target; combine/compare existing information of that target; task another sensor to provide information on the target, and/or task another platform to provide information on the target.

The data generated at the step 508 may be output to the vehicle interface component 114. For instance, that interface may display information to the operator based on the received data that usage of the resources, including the sensors, should be modified in view of the determined integrity of the track data and other factors. In some cases, the data may be used to directly/autonomously modify the vehicle system so that usage of the sensors is modified, but in other cases human operator confirmation or selection may be required, e.g. based on a suggestion generated by the resource monitor component, such as employing resources with increased data integrity until the task can be undertaken. Thus, embodiments can use data based on the integrity values to determine future utilisation of resources, such as sensors should be used, and in which modes, for future tracking of one or more of the detected entities.

Some smart sensors may use a schema to define their behaviour, e.g. which modes will be used. A sensor schema is a complex rule set that can manage sensor behaviour based on operational conditions and what the sensors report is being detected. Schemas can be used to create or exhibit a behaviour. When considered in this context, the schema can be used to manage which sensor types are used and in what modes, in response to the detection of entities. For example, if a detected entity moves high and fast relative to the vehicle then it could be considered more threatening and so the system should invest more sensor resource into tracking that entity.

Some embodiments may perform additional operations, e.g. compare the output of the proportionality checker 204 and the resource monitor 206 for mismatch, e.g. to warn the operator that they are using resources inappropriately.

Embodiments can consider sources of freely available intelligence, i.e. Open Intelligence (OpIntel), to build upon the perceived level of integrity. Therefore, if the embodiment knows the quantity and types of aircraft in an area, e.g. a conflict zone, then the level of integrity or trust can be increased. Embodiments can improve on traditional aircraft sensing using features that simulate human gut instinct, by considering other attributes, which traditional sensing systems do not do.

By allocating resources in a manner that is proportional to the perceived importance of a threat, such as a detected object, embodiments can help ensure that system resources are not devoted to a low priority task, such as tracking when a detected entity is in fact spoof or poses little threat. By employing embodiments autonomous systems can be better protected from manipulation by adversaries. Embodiments may protect against some system failures and inconsistencies that would not conventionally be detected.

The skilled person will appreciate that embodiments of the components described herein can be implemented using any suitable software applications, programming languages, data editors, etc, and may be represented/stored/processed using any suitable data structures, and so on. It will also be understood that the steps described herein as part of the detailed embodiments may be re-ordered, omitted and/or repeated. Additional steps may also be performed. Some steps may be performed concurrently instead of sequentially.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is is set out in the independent claims, with some optional features set out in the claims dependent thereto.

## Claims

1. A computer-implemented method of determining utilisation of resources in a system having autonomous capability, the method comprising:
receiving (304) a plurality of input data from a respective plurality of components of the system;
receiving (302) rule set data comprising a plurality of rules, each of the plurality of rules configured to determine an integrity value for the input data;
processing (306) the plurality of input data and the rule set data to generate an integrity value for each of the plurality of input data;
using (308) the integrity values to determine utilisation of resources of the system;
the method being further **characterised in that**:
receiving (404) task data relating to a plurality of tasks to be performed by the system;
checking (406) the integrity values determined for each input data associated with a said task; and,
generating (406) data indicating whether the component providing the input data associated with a said task should continue to be used as a resource for that task,
wherein the generated data further comprises information regarding whether utilisation of the components being used for the tasks should be modified.

2. A method according to claim 1, wherein the processing (306) the plurality of input data and the rule set data to generate an integrity value for each of the plurality of input data comprises:
generating a low integrity value for the input data if the input data indicates unusual behaviour of a detected object or system component.

3. A method according to claim 1 or 2, wherein the processing (306) the plurality of input data and the rule set data to generate an integrity value for each of the plurality of input data comprises:
generating a high integrity value for the input data if the input data matches one or more other input data.

4. A method according to any preceding claim, wherein the plurality of input data comprises a plurality of track data output by a respective plurality of sensors, and wherein each of the plurality of track data comprises information regarding at least one entity detected by the respective sensor.

5. A method according to claim 4, wherein the method further comprises using the integrity values to determine utilisation of the sensors in future tracking of the detected entities.

6. A method according to claim 4 or 5, further comprising obtaining additional sensor data from at least one of the plurality of sensors, the additional sensor data comprising a confidence rating for the track data provided by the sensor, and wherein the additional sensor data is used by at least one of the rules in the plurality of rules.

7. A method according to any of claims 4 to 6, wherein the integrity value represents confidence that the detected entity of the track data is a real object, and a rule in the rule set data generates a high integrity value for the track data upon determining that the detected entity of the track data is likely to be a real object.

8. A method according to any preceding claim, wherein the task data identifies an object and/or an area, and an action to be taken in relation to the object and/or the area.

9. A method according to any preceding claim, wherein if the integrity value of the input data is below a threshold value then generating data indicating that the component providing the input data should not be allocated to the task in future,
wherein each of the plurality of tasks has an associated importance value, and
the threshold value is set lower for a task having a low importance value, and the threshold value is set higher for a task having a high importance value.

10. A method according to any preceding claim, further comprising:
receiving a plurality of resource usage data, each of the plurality of resource usage data comprising a value representing a current usage level of a resource of the system, and
processing the resource usage data and the data integrity value relating to a component performing a task to generate a target usage level of the resource to be used in relation to the task.

11. A method according to claim 10, wherein the task comprises tracking an object using a resource comprising a sensor, and the processing comprises reducing the target usage level of the sensor if the data integrity value of the sensor is low.

12. A computer program product comprising instructions which, when the program is executed by a computer, cause the computer to carry out a method according to any of claims 1 to 11.

13. A device comprising a processor configured to execute a method according to any of claims 1 to 11.

14. A system having autonomous capability and including a processor configured to configured to execute a method according to any of claims 1 to 11.

15. A vehicle comprising a system according to claim 14.

## Patentansprüche

1. Computerimplementiertes Verfahren zum Bestimmen einer Nutzung von Ressourcen in einem System, das autonome Fähigkeit aufweist, das Verfahren umfassend:
Empfangen (304) einer Vielzahl von Eingabedatenelementen von einer jeweiligen Vielzahl von Komponenten des Systems;
Empfangen (302) von Regelsatzdatenelementen, umfassend eine Vielzahl von Regeln, wobei jede der Vielzahl von Regeln konfiguriert ist, um einen Integritätswert für das Eingabedatenelement zu bestimmen;
Verarbeiten (306) der Vielzahl von Eingabedatenelementen und der Regelsatzdatenelementen, um einen Integritätswert für jedes der Vielzahl von Eingabedatenelementen zu erzeugen;
Verwenden (308) der Integritätswerte, um die Nutzung von Ressourcen des Systems zu bestimmen;
wobei das Verfahren ferner **gekennzeichnet ist durch**:
Empfangen (404) von Aufgabendatenelementen, die sich auf eine Vielzahl von Aufgaben, die **durch** das System durchzuführen sind, beziehen;
Prüfen (406) der Integritätswerte, die für jedes Eingabedatenelement, das einer Aufgabe zugeordnet ist, bestimmt werden; und,
Erzeugen (406) von Datenelementen, die angeben, ob die Komponente, die die Eingabedatenelemente bereitstellt, die einer Aufgabe zugeordnet sind, weiterhin als eine Ressource für diese Aufgabe verwendet werden soll,
wobei die erzeugten Datenelemente ferner Informationen darüber umfassen, ob die Nutzung der Komponenten, die für die Aufgaben verwendet werden, modifiziert werden soll.

2. Verfahren nach Anspruch 1, wobei das Verarbeiten (306) der Vielzahl von Eingabedatenelementen und der Regelsatzdatenelementen, um einen Integritätswert für jedes der Vielzahl von Eingabedatenelementen zu erzeugen, umfasst:
Erzeugen eines niedrigen Integritätswerts für die Eingabedatenelemente, falls die Eingabedatenelemente ein ungewöhnliches Verhalten eines erfassten Objekts oder einer Systemkomponente angeben.

3. Verfahren nach Anspruch 1 oder 2, wobei das Verarbeiten (306) der Vielzahl von Eingabedatenelementen und der Regelsatzdatenelementen, um einen Integritätswert für jedes der Vielzahl von Eingabedatenelementen zu erzeugen, umfasst:
Erzeugen eines hohen Integritätswerts für die Eingabedatenelemente, falls die Eingabedatenelemente mit einem oder mehreren anderen Eingabedatenelementen übereinstimmen.

4. Verfahren nach einem der vorstehenden Ansprüche, wobei die Vielzahl von Eingabedatenelementen eine Vielzahl von Spurdatenelementen umfasst, die durch eine jeweilige Vielzahl von Sensoren ausgegeben werden, und wobei jedes der Vielzahl von Spurdatenelementen Informationen bezüglich mindestens einer Entität, die durch den jeweiligen Sensor erfasst werden, umfasst.

5. Verfahren nach Anspruch 4, wobei das Verfahren ferner das Verwenden der Integritätswerte umfasst, um die Nutzung der Sensoren bei dem zukünftigen Verfolgen der erfassten Entitäten zu bestimmen.

6. Verfahren nach Anspruch 4 oder 5, ferner umfassend ein Erhalten zusätzlicher Sensordatenelemente von mindestens einem der Vielzahl von Sensoren, die zusätzlichen Sensordatenelemente umfassend eine Konfidenzbewertung für die Spurdatenelemente, die durch den Sensor bereitgestellt werden, und wobei die zusätzlichen Sensordatenelemente durch mindestens eine der Regeln in der Vielzahl von Regeln verwendet werden.

7. Verfahren nach einem der Ansprüche 4 bis 6, wobei der Integritätswert die Konfidenz darstellt, dass die erfasste Entität der Spurdatenelemente ein reales Objekt ist, und eine Regel in den Regelsatzdatenelementen beim Bestimmen, dass die erfasste Entität der Spurdatenelemente wahrscheinlich ein reales Objekt ist, einen hohen Integritätswert für die Spurdatenelemente erzeugt.

8. Verfahren nach einem der vorstehenden Ansprüche, wobei die Aufgabendatenelemente ein Objekt und/oder einen Bereich und eine Maßnahme identifizieren, die in Bezug auf das Objekt und/oder den Bereich zu ergreifen ist.

9. Verfahren nach einem der vorstehenden Ansprüche, wobei, falls der Integritätswert der Eingabedatenelemente unter einem Schwellenwert liegt, dann Datenelemente erzeugt werden, die angeben, dass die Komponente, die die Eingabedatenelemente bereitstellt, der Aufgabe in Zukunft nicht zugewiesen werden soll,
wobei jede der Vielzahl von Aufgaben einen zugeordneten Wichtigkeitswert aufweist, und
der Schwellenwert für eine Aufgabe, die einen niedrigen Wichtigkeitswert aufweist, niedriger eingestellt ist, und der Schwellenwert für eine Aufgabe, die einen hohen Wichtigkeitswert aufweist, höher eingestellt ist.

10. Verfahren nach einem der vorstehenden Ansprüche, ferner umfassend:
Empfangen einer Vielzahl von Ressourcenverwendungsdatenelementen, jedes der Vielzahl von Ressourcenverwendungsdatenelementen umfassend einen Wert, der einen aktuellen Verwendungsgrad einer Ressource des Systems darstellt, und
Verarbeiten der Ressourcenverwendungsdatenelemente und des Datenelementintegritätswerts, der sich auf eine Komponente bezieht, die eine Aufgabe durchführt, um einen Zielverwendungsgrad der Ressource, die in Bezug auf die Aufgabe zu verwenden ist, zu erzeugen.

11. Verfahren nach Anspruch 10, wobei die Aufgabe das Verfolgen eines Objekts unter Verwendung einer Ressource umfasst, umfassend einen Sensor, und das Verarbeiten ein Reduzieren des Zielverwendungsgrads des Sensors umfasst, falls der Datenelementintegritätswert des Sensors niedrig ist.

12. Computerprogrammprodukt, umfassend Anweisungen, die, wenn das Programm durch einen Computer ausgeführt wird, den Computer veranlassen, ein Verfahren nach einem der Ansprüche 1 bis 11 vorzunehmen.

13. Vorrichtung, umfassend einen Prozessor, der konfiguriert ist, um ein Verfahren nach einem der Ansprüche 1 bis 11 auszuführen.

14. System, das autonome Fähigkeit aufweist und einen Prozessor einschließt, der konfiguriert ist, um ein Verfahren nach einem der Ansprüche 1 bis 11 auszuführen.

15. Fahrzeug, umfassend ein System nach Anspruch 14.

## Revendications

1. Procédé mis en œuvre par ordinateur permettant de déterminer l'utilisation de ressources dans un système ayant une capacité autonome, le procédé comprenant :
la réception (304) d'une pluralité de données d'entrée à partir d'une pluralité respective de composants du système ;
la réception (302) de données d'ensemble de règles comprenant une pluralité de règles, chacune de la pluralité de règles étant configurée pour déterminer une valeur d'intégrité pour les données d'entrée ;
le traitement (306) de la pluralité de données d'entrée et des données d'ensemble de règles pour générer une valeur d'intégrité pour chacune de la pluralité de données d'entrée ;
l'utilisation (308) des valeurs d'intégrité pour déterminer l'utilisation de ressources du système ;
le procédé étant en outre **caractérisé en ce que** :
la réception (404) de données de tâches relatives à une pluralité de tâches à effectuer par le système ;
la vérification (406) des valeurs d'intégrité déterminées pour chaque donnée d'entrée associée à une dite tâche ; et,
la génération (406) de données indiquant si le composant fournissant les données d'entrée associées à une dite tâche doit continuer à être utilisé en tant que ressource pour cette tâche,
dans lequel les données générées comprennent en outre des informations concernant le fait de savoir si l'utilisation des composants utilisés pour les tâches doit être modifiée.

2. Procédé selon la revendication 1, dans lequel le traitement (306) de la pluralité de données d'entrée et des données d'ensemble de règles pour générer une valeur d'intégrité pour chacune de la pluralité de données d'entrée comprend :
la génération d'une valeur d'intégrité faible pour les données d'entrée si les données d'entrée indiquent un comportement inhabituel d'un objet ou d'un composant de système détecté.

3. Procédé selon la revendication 1 ou 2, dans lequel le traitement (306) de la pluralité de données d'entrée et des données d'ensemble de règles pour générer une valeur d'intégrité pour chacune de la pluralité de données d'entrée comprend :
la génération d'une valeur d'intégrité élevée pour les données d'entrée si les données d'entrée correspondent à une ou plusieurs autres données d'entrée.

4. Procédé selon l'une quelconque revendication précédente, dans lequel la pluralité de données d'entrée comprend une pluralité de données de suivi délivrées par une pluralité respective de capteurs, et dans lequel chacune de la pluralité de données de suivi comprend des informations concernant au moins une entité détectée par le capteur respectif.

5. Procédé selon la revendication 4, dans lequel le procédé comprend en outre l'utilisation des valeurs d'intégrité pour déterminer l'utilisation des capteurs dans le suivi futur des entités détectées.

6. Procédé selon la revendication 4 ou 5, comprenant en outre l'obtention de données de capteurs supplémentaires à partir d'au moins un de la pluralité de capteurs, les données de capteurs supplémentaires comprenant un indice de confiance pour les données de suivi fournies par le capteur, et dans lequel les données de capteurs supplémentaires sont utilisées par au moins une des règles dans la pluralité de règles.

7. Procédé selon l'une quelconque des revendications 4 à 6, dans lequel la valeur d'intégrité représente la confiance dans le fait que l'entité détectée des données de suivi est un objet réel, et une règle dans les données d'ensemble de règles génère une valeur d'intégrité élevée pour les données de suivi lorsqu'il est déterminé que l'entité détectée des données de suivi est susceptible d'être un objet réel.

8. Procédé selon l'une quelconque revendication précédente, dans lequel les données de tâches identifient un objet et/ou une zone, et une action à entreprendre par rapport à l'objet et/ou à la zone.

9. Procédé selon l'une quelconque revendication précédente, dans lequel si la valeur d'intégrité des données d'entrée est inférieure à une valeur seuil, des données indiquant que le composant fournissant les données d'entrée ne doit pas être affecté à la tâche à l'avenir sont alors générées,
dans lequel chacune de la pluralité de tâches a une valeur d'importance associée, et
la valeur seuil est fixée à un niveau inférieur pour une tâche ayant une valeur d'importance faible, et la valeur seuil est fixée à un niveau supérieur pour une tâche ayant une valeur d'importance élevée.

10. Procédé selon l'une quelconque revendication précédente, comprenant en outre :
la réception d'une pluralité de données d'utilisation de ressources, chacune de la pluralité de données d'utilisation de ressources comprenant une valeur représentant un niveau d'utilisation actuel d'une ressource du système, et
le traitement des données d'utilisation de ressources et de la valeur d'intégrité de données relatives à un composant effectuant une tâche pour générer un niveau d'utilisation cible de la ressource à utiliser par rapport à la tâche.

11. Procédé selon la revendication 10, dans lequel la tâche comprend le suivi d'un objet à l'aide d'une ressource comprenant un capteur, et le traitement comprend la réduction du niveau d'utilisation cible du capteur si la valeur d'intégrité de données du capteur est faible.

12. Produit-programme informatique comprenant des instructions qui, lorsque le programme est exécuté par un ordinateur, amènent l'ordinateur à réaliser un procédé selon l'une quelconque des revendications 1 à 11.

13. Dispositif comprenant un processeur configuré pour exécuter un procédé selon l'une quelconque des revendications 1 à 11.

14. Système ayant une capacité autonome et comportant un processeur configuré pour exécuter un procédé selon l'une quelconque des revendications 1 à 11.

15. Véhicule comprenant un système selon la revendication 14.
